# EUROPEAN PATENT APPLICATION

(11) **EP 4 610 895 A1**
(43) Date of publication of application: **03.09.2025**
(21) Application number: 24305311.3
(22) Date of filing: 27.02.2024
(51) Int. Cl.: G06N 10/80, G06N 10/20

(54) **METHOD OF SIMULATING EXECUTION OF A QUANTUM ALGORITHM BY USING A CLUSTER OF NON-QUANTUM COMPUTERS**

(71) Applicant: BULL SAS, 78340 Les Clayes-Sous-Bois (FR)
(72) Inventor: GAZDA, Arnaud, 78000 VERSAILLES (FR); CHEAH, Stanley, 78370 PLAISIR (FR)
(74) Representative: Plasseraud IP

(57) **Abstract**

A method of simulating execution of a quantum algorithm by using a cluster of non-quantum computers (100) comprises adding at least one SWAP gate before at least one remote gate in an initial quantum circuit that corresponds to the quantum algorithm, so that the remote gate becomes local gate. The invention proposes testing several combinations of SWAP gates to be added before a gate sequence portion of the initial quantum circuit, and selecting one of the tested combinations of SWAP gates that maximizes the gate number in the sequence portion. The number of SWAP gates added into the quantum circuit and a run time of the quantum algorithm using the cluster are reduced in this way.

## Description

The invention relates to a method of simulating execution of a quantum algorithm by using a cluster of non-quantum computers. As usual in the art, a non-quantum computer also referred to as classical computer is designed to operate through bit-handling, as opposed to a quantum computer which handles qubits for executing a quantum circuit.

### -- BACKGROUND OF THE INVENTION --

Many industrial issues benefit from executing quantum algorithms. This includes algorithms for optimizing industrial processes, in particular for determining corrected settings of production plants in order to compensate for environment variations and parameter time-drifts.

Such quantum algorithms are primarily designed and intended to be executed by quantum computers. But up to now, quantum computers have not achieved high enough computational accuracy, in particular because of noise causes which interfere with nominal operations of existing quantum computers. In such current situation, it is useful simulating execution of quantum algorithms by using non-quantum computers.

However, having a non-quantum computer executing a quantum algorithm is limited to small numbers of implemented qubits, because the number of quantum state amplitude values to handle increases exponentially with the number of qubits: 2^{N} amplitude values for each quantum state with N qubits, N being a non-zero integer. Therefore, it is crucial implementing multiple non-quantum computers which are interconnected as a cluster for simulating execution of quantum algorithms with large qubit numbers. Commonly in the art, non-quantum computers interconnected as a cluster are referred to as computing nodes, or nodes for short. Such non-quantum computer cluster can then provide sufficient computing resources, but its collective operation is limited by the communication resources which are available to the computers within the cluster.

In a known manner, a quantum state is a tensor-product of ordered qubits, comprising local qubits and remote qubits when handled by a non-quantum computer cluster. Indeed with such structure, the amplitude values of any quantum state that correspond to two tensor-product base states which differ through base states of a single one of the qubits are stored either in a same one of the nodes if the differentiating qubit is local, or stored in two separate ones of the nodes if the differentiating qubit is remote. Using common quantum state notation, any quantum state has respective amplitude values for the tensor-product base states |00...>, |01...>, |10...>, |11...>, etc. N being again the qubit number in the tensor product, each quantum state is thus described with 2^{N} amplitude values each corresponding to a respective one of the tensor-product base states. For example, when using 2ⁿ nodes to store a quantum state, n being another non-zero integer but less than N, each node is assigned to the tensor-product base states that begin with a respective identified sequence of qubit base states, and all quantum state amplitude values that correspond to this beginning sequence are stored in this node for each quantum state. Then, for n equalling 2, the quantum state amplitude values that correspond to tensor-product base states beginning with |00...> are stored in a first node of the cluster, those corresponding to tensor-product base states beginning with |01...> are stored in a second cluster node, those corresponding to |10...> are stored in a third one, and those corresponding to |11...> in a fourth one. Similar storage distribution rule is applied to any n-value: the n first qubits in the tensor product are remote qubits, and the n+1 to N remaining ones are local qubits.

The quantum algorithm is implemented as a quantum circuit that is comprised of a sequence of ordered gates which involve each at least one of the qubits. Each gate is either a local gate if it involves only local qubit(s), or a remote gate if involving at least one remote qubit, without considering control qubit(s) possibly further involved with the gate. Executing a remote gate requires gathering within each of the nodes the amplitude values that relate to each remote qubit involved with the gate, using the communication resources of the cluster to this purpose. A local gate can be executed separately by each node, and thus does not use communication resources. Then, communications between the nodes for transforming the remote gates into local gates form a bottleneck which limits the capability of the cluster to simulation-execute the quantum algorithm, in particular due to communication-time and -bandwidth with respect to the number of remote qubits and the number of remote gates in the quantum circuit.

Starting from this situation, one object of the present invention consists in making it easier to simulation-execute a quantum algorithm by using a cluster of non-quantum computers.

In particular, the invention aims at reducing the impact of remote gates onto simulation-execution time of a quantum algorithm using a cluster of non-quantum computers.

Another object of the present invention consists in reducing the need for large cluster communication resources when simulation-executing the quantum algorithm.

### -- SUMMARY OF THE INVENTION --

For meeting this object or others, a first aspect of the present invention proposes a new method of simulating execution of a quantum algorithm by using a cluster of non-quantum computers. Within the cluster, the non-quantum computers referred as to nodes are interconnected with each other so that any pair out of these nodes is capable of swapping values which are stored each in a respective one of both nodes of the pair.

The invention method comprises first compiling an initial quantum circuit which corresponds to the quantum algorithm to obtain a compiled quantum circuit, and then having the nodes execute the quantum algorithm using the compiled quantum circuit. The initial quantum circuit comprises a sequence of ordered gates involving each at least one of a plurality of qubits, any gate being either local gate or remote gate with respect to the nodes as before. Compiling the initial quantum circuit comprises adding at least one SWAP gate before at least one remote gate in this initial quantum circuit so that the remote gate becomes local gate and execution of the at least one SWAP gate followed by the local gate is equivalent to execution of the remote gate. To this end, at least one of the added SWAP gates is effective between a remote qubit involved with the remote gate and a local qubit that is not involved with this remote gate. Then, the compiled quantum circuit is comprised of sequence portions to be executed after one another, and separated by at least one added SWAP gate between two successive ones of the sequence portions, each sequence portion comprising local gates but without any remote gate.

According to the invention, compiling of the initial quantum circuit comprises the following steps /1/ to /3/ executed for at least one of the sequence portions which extends from a gate of the initial quantum circuit and comprises a variable number of successive gates of this initial quantum circuit in a quantum circuit execution order:
/1/for each of several tested combinations of SWAP gates to be added before the sequence portion, each tested combination comprising one or more SWAP gates, determining respective transformed sequence portions in which each remote gate has become a local gate and such that execution of the tested combination of SWAP gates followed by execution of the corresponding transformed sequence portion is equivalent to execution of the sequence portion as existing the initial quantum circuit;
/2/ selecting one of the tested combinations of SWAP gates that maximizes the gate number in the sequence portion, the corresponding transformed sequence portion being called maximized sequence portion; and
/3/ in the initial quantum circuit, replacing the sequence portion as existing in this initial quantum circuit by the selected combination of SWAP gates followed by the maximized sequence portion, for obtaining the compiled quantum circuit.

The invention method thus suppresses the remote gates existing in the initial quantum circuit by adding SWAP gates that are grouped together between the sequence portions. Each remote gate is thus replaced with a corresponding local gate combined with at least one SWAP gate which has been added before the sequence portion. Thanks to selecting the maximized sequence portion, the number of added SWAP gates is reduced and use of communication resources within the computing node cluster is thus minimized.

Reducing the communication sessions which are implemented within the cluster during execution of the quantum algorithm in form of the compiled quantum circuit allows reducing the execution time, also called run time, too.

Practically, the compiled quantum circuit most often comprises several separated sequence portions each devoid of remote gates. In such cases, the sequence portions of the compiled quantum circuit may be determined successively: a first one of these sequence portions by executing steps /1/ to /3/ from a first gate of the initial quantum circuit, and then each next sequence portion in the quantum circuit execution order by executing steps /1/ to /3/ for this next sequence portion from a next gate of the initial quantum circuit after the preceding maximized sequence portion.

Advantageously, the invention method may further comprise the following step executed before step /1/ for at least one of the sequence portions:
- reordering the gates within the sequence portion compared to the initial quantum circuit based on commutation capabilities of these gates.

Generally for the invention method, the tested combinations of SWAP gates may be worked out using a directed acyclic graph that comprises at least the sequence portion as existing in the initial quantum circuit. In particular, such directed acyclic graph makes reordering possibilities more obvious for the gates in a quantum circuit through cross-free maintaining horizontal shifts of parts of the graph.

A second aspect of the invention proposes a computer-program product that comprises instruction codes suitable for compiling a quantum circuit. These instruction codes make a cluster of interconnected non-quantum computers, referred to as nodes, that runs the computer-program product from an initial quantum circuit execute steps /1/ to /3/ as recited above for at least one sequence portion. The computer-program product thus allows implementing a method of simulation-execution of a quantum algorithm according to the first invention aspect, using a cluster of several non-quantum computers.

In particular, the computer-program product may cause an iterative execution of the sequence portion maximization. To this end, the instruction codes may be further suitable for determining successively several sequence portions of the compiled quantum circuit: a first sequence portion by executing steps /1/ to /3/ from a first gate of the initial quantum circuit, and then each next sequence portion in the quantum circuit execution order by executing steps /1/ to /3/ for this next sequence portion from a next gate of the initial quantum circuit after the preceding maximized sequence portion.

Advantageously, the instruction codes may be further suitable for reordering before step /1/ for at least one sequence portion, the gates within this sequence portion compared to the initial quantum circuit based on commutation capabilities of these gates.

### -- BRIEF DESCRIPTION OF THE DRAWINGS --

Figure 1 shows a cluster of non-quantum computers that may be used for implementing the invention method.
Figure 2 exhibits a simplified example of initial quantum circuit which can be processed according to the invention method.
Figure 3a and 3b exhibit respectively another quantum circuit (Figure 3a) and a corresponding directed acyclic graph (Figure 3b).
Figure 4 exhibits a compiled quantum circuit as resulting from processing the initial quantum circuit of Figure 2 according to the invention method.

### -- DETAILED DESCRIPTION OF THE INVENTION --

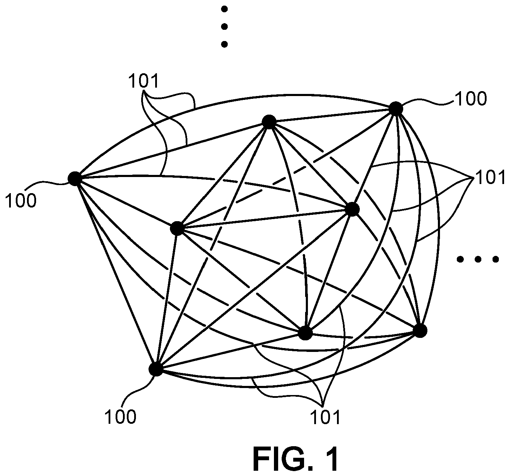

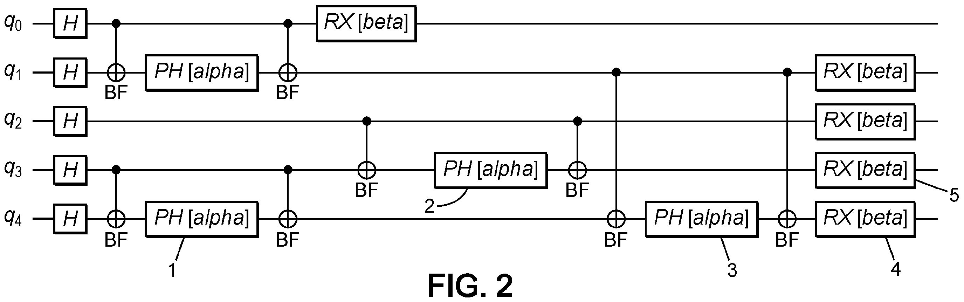

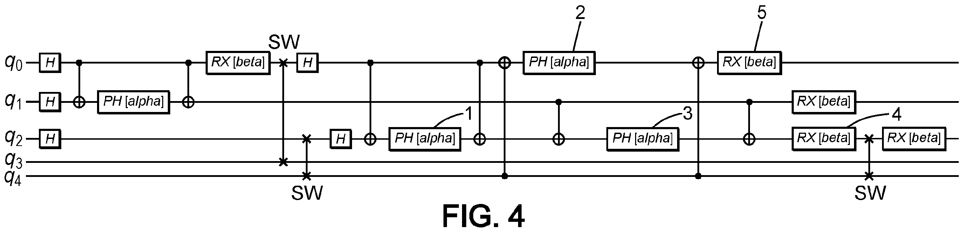

A cluster of non-quantum computers which can be used for implementing the invention is symbolically represented in Figure 1. Reference number 100 denotes any of the non-quantum computers in the cluster, with only eight of them represented in the figure, and reference number 101 denotes any communication link that interconnects the non-quantum computers 100. Each non-quantum computer 100 is commonly referred to as a node within the cluster. The communication links 101 may be of any type known in the art regarding its hardware and software structures, so that the interconnected nodes 100 form a network allowing distributed simulation-execution of quantum algorithms. In particular, the nodes 100 are used for storing quantum state amplitude values, and are capable to execute gates that operate only with amplitude values which are stored together in one of the nodes. Each of the communication links 101 is suitable for swapping quantum state amplitude values which are stored separately in both nodes connected to each other by this communication link. Using the numbers n and N as defined in the general part of the present description, Figures 2 and 4 correspond to n and N respectively equalling 3 and 5. In such simplified example, the cluster comprises 8 nodes 100 and each quantum state is determined by 32 complex amplitude values. Hence, a quantum state is a tensor product of five qubits which are respectively denoted q₀, q₁, q₂, q₃ and q₄ in Figures 2 and 4. The amplitude values of each quantum state are supposed to be stored in the nodes 100 in a distributed manner as also described in the general part of the present description. In the sequel, q₀, q₁ and q₂ are assumed to be local qubits, and q₃ and q₄ remote qubits.

In a known manner, a quantum algorithm is executed in form of a quantum circuit, and it is most often beneficial to equivalence-transform this quantum circuit for physical implementation issue or any other purpose. Such transformation of the quantum circuit is commonly referred to as compilation, or transpilation when implemented within one and same coding level. Hence, compilation is applied to an initial quantum circuit which corresponds to the quantum algorithm, and results in a compiled quantum circuit also corresponding to the quantum algorithm.

Any quantum circuit is comprised of an ordered sequence of gates each operating onto at least one of the qubits. If all qubits that are modified or combined by a gate are local qubits, the gate can be executed as such by the nodes 100 and is referred to as a local gate. If the gate modifies at least one remote qubit or combines several qubits including a remote one, then being referred to as a remote gate, direct execution of such remote gate by the nodes 100 is not possible. The inventors indicate that such classification between local and remote gates does not take into account control qubit(s) possibly further involved with any of the gates. Such control qubits are well known in the field of quantum circuits so that it is unnecessary to define them again here.

A remote gate that involves only one remote qubit can be transformed into a local gate by first executing a SWAP gate which exchanges the remote qubit with one of the local qubits in the distribution of the amplitude values as stored by the nodes 100. If the remote gate involves several remote qubits, at least one SWAP gate is to be added before the remote gate for each of its remote qubits, so as to exchange them with respective different ones of the local qubits. The initial remote gate is thus transformed into a local gate preceded by the SWAP gate(s). In both cases, the remote gate can then be executed by the node cluster by first executing the SWAP gate(s) and then the gate transformed from initial remote type to local type. Actually, such remote-gate transformation changes the qubit distribution implemented for storage of the quantum state amplitude values in all the nodes 100, but such change can be tracked through qubit routing and propagated to the next gates in the quantum circuit.

In the example of initial quantum circuit that is exhibited in Figure 2, gates denoted with H-letter are Hadamard gates, those denoted BF are bitflip gates with full dark dots and cored circles indicating the control qubits and the operation qubits respectively, each gate denoted with PH[alpha] is a phase gate with any alpha-angle, and each gate denoted with RX[beta] is a rotation gate with X-axis and any beta-angle. Such initial quantum circuit is of QAOA-type, or Quantum Approximate Optimization Algorithm, and used herein only for illustration purpose without any limitation.

In Figure 2 and also Figures, 3a, 3b and 4, execution order of the gate sequence is from left side to right side. In a preliminary step, the initial quantum circuit may be modified using commutation capabilities of some of its gates. For example, two successive gates which operate just after one another each on a qubit subset that is disjoint from that of the other gate can be exchanged in the execution order.

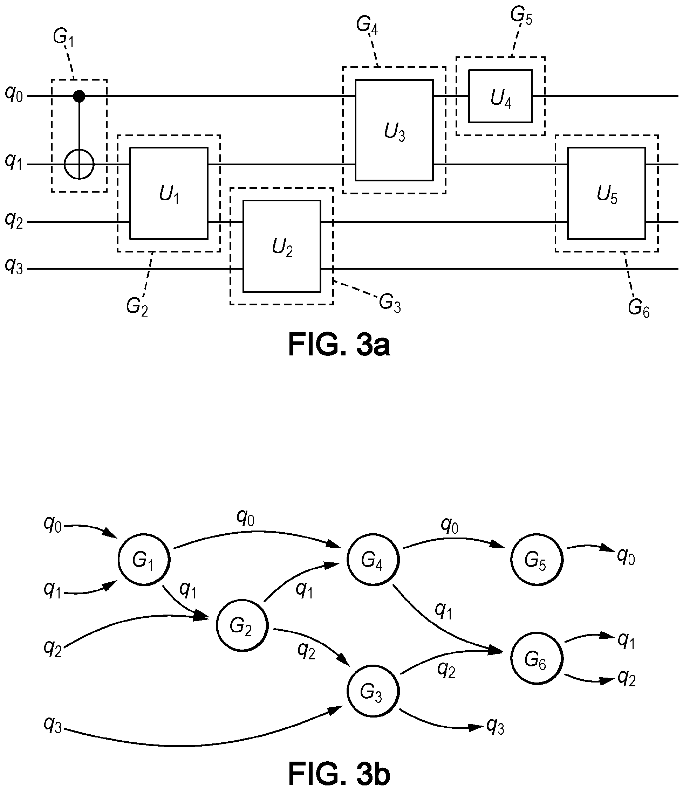

Changes in the gate execution order, while maintaining the quantum algorithm unchanged, can be worked out using a directed acyclic graph, also known as DAG. Figure 3a represents a non-limiting example of quantum circuit portion involving only qubits q₀ to q₃ for simplification, q₀ to q₂ being local qubits and q₃ being remote. G₁ is a controlled bitflip gate, G₂ is a gate producing U₁-operator, G₃ is another gate producing U₂-operator, G₄ is still another gate producing Us-operator, and G₅ and G₆ further gates producing U₄- and U₅-operators respectively. Gs-gate is the only remote gate in this quantum circuit portion. The corresponding directed acyclic graph is exhibited in Figure 3b. Construction of such directed acyclic graph is known in the art, in particular from the article entitled "Optimizing T gates and Clifford+T circuit as π/4 rotations around Paulis", Fang Zhang and Jianxin Chen, 2019, arXiv: 1903.12456 [quant-ph].

A possible transformed quantum circuit relating to unchanged quantum algorithm can be obtained in a basic way, i.e. without gate-reordering directly from the quantum circuit of Figure 3a, by first inserting a SWAP gate just before Gs-gate between qs-qubit and q₁-qubit, since q₂-qubit is not available because involved with Gs-gate, and further adding a second SWAP gate before G₄-gate between qs-qubit and q₂-qubit, and finally adding a third SWAP gate before G₆-gate again between qs-qubit and q₂-qubit. Such possible transformed quantum circuit has thus been obtained by adding three SWAP gates.

An exploration of the directed acyclic graph of Figure 3b shows that gates G₄ and G₅ can be executed before gate G₃. If G₄- and G₅-gates are reordered to be prior to Gs-gate, q₀-qubit is no longer involved after Gs-gate and can be safely swapped with the remote qs-qubit to perform the initially-remote gate G₃ afterwards. Put another way, the graph part comprised of G₄- and G₅-gates can be translated toward left side until between G₂- and Gs-gates, without causing connecting arrows to cross. Then, the transformed quantum circuit that is obtained by adding a SWAP gate operating between q₀- and q₃-qubits after Gs-gate but before Gs-gate also relates to the unchanged quantum algorithm. It is obtained by adding only one SWAP gate thanks to prior gate-reordering, instead of three added SWAP gates as in the previous basic method.

The invention method proceeds by executing the following step sequence /S1/-/S3/, initially from a first gate of the gate sequence of the initial quantum circuit:
/S1/ inserting alternatively several tested combinations of SWAP gates before the first gate of the initial quantum circuit, and for each of these tested SWAP gates combinations, determining a transformed gate sequence portion which extends from the first gate of the initial quantum circuit into the execution order direction, and which is equivalent to the corresponding sequence portion of the initial quantum circuit regarding execution result, but is comprised of only local gates without any remote gate. Each tested combinations of SWAP gates may be proposed by reordering beforehand some of the gates of the initial quantum circuit as described earlier, in particular in view of minimizing the number of SWAP gates to add;
/S2/ again for each of the tested combinations of SWAP gates implemented in step /S1/, determining a number of the gates, all of local type, that are contained in the corresponding transformed sequence portion, and selecting that one of these transformed sequence portions that has the maximum gate number. So-selected sequence portion is referred to as maximized sequence portion; and
/S3/ replacing in the initial quantum circuit the sequence portion that corresponds to the maximized sequence portion with this latter preceded by the corresponding SWAP gate combination.

This sequence of steps /S1/-/S3/ is repeated by moving in the execution order direction along the initial quantum circuit being gradually transformed, each time from the first next gate after the preceding maximized sequence portion, until the end of the quantum circuit. The transformed gate sequence that results from all executions of step /3/ constitutes the compiled quantum circuit.

Figure 4 exhibits the compiled quantum circuit obtained in this way according to the invention from the initial quantum circuit of Figure 2. No gate remains involving q₃- and q₄-qubits as desired, except the added SWAP gates. Gate-reordering has been implemented, in particular for postponing execution of the phase gate initially operating on remote q₄-qubit, and three SWAP gates have been added, denoted SW. Reference numbers 1 to 5 in both Figures 2 and 4 indicate each an initially-remote gate transformed into a corresponding local gate denoted with same reference number. The compiled quantum circuit is then comprised of three sequence portions each devoid of remote gates, the first and second sequence portions being separated by a combination of two SWAP gates, and the second and third sequence separated by another combination consisting of a single SWAP gate.

The compiled quantum circuit is then to be simulation-executed by the node cluster of Figure 1. Local gates are executed internally to the nodes 100. The remaining remote gates are only SWAP gates, including those added according to the invention method. Execution of these SWAP gates is performed by transmitting the concerned quantum state amplitude values between the nodes 100 through the connection links 101. The invention allows reducing the overall number of amplitude values that are transmitted during the execution of the quantum circuit. In case two SWAP gate combinations which are tested for a same sequence portion lead to equal gate numbers for the corresponding transformed sequence portions, that one of these tested combinations which involves a most significant local qubit in the distribution for storage of the amplitude values in the nodes may be preferred. As a result of the invention, the execution time of the quantum algorithm through simulation using the cluster of non-quantum computers is reduced compared to at least some of the prior art compilation methods.

The invention can obviously be applied to any qubit number N larger than that considered above for simplified exemplifying purpose, and also to any number of non-quantum computers in the cluster, provided that this computer number is less than 2^{N}.

The inventors now compare numbers of SWAP gates to be added and execution times as resulting from the invention, with corresponding values resulting from prior art compilation methods. These prior art compilation methods are the following ones:
- so-called basic method, which does not implement gate-reordering but directly replaces each remote gate individually with a SWAP gate preceding the so-localized gate,
- so-called basic layer method, which implements gate-reordering as described with reference to Figure 3b to obtain extended sequence portions each devoid of remote gate, and
- so-called cache blocking, as disclosed in the article entitled "Cache blocking technique to large scale quantum computing simulation on supercomputers", Jun Doi and Hiroshi Hiroii, 2020 IEEE International Conference on Quantum Computing and Engineering (QCE), IEEE 2020, pp. 212-222.

As a reminder, the invention method implements gate-reordering when beneficial and maximizes the lengths of the sequence portions.

The inventors compared the run time of QAOA Max Cut circuits ranging from 30 to 37 qubits compiled with the above-listed methods. The graphs that represent the Max Cut circuits have been generated randomly, with an edge density of 0.1 to control the number of operations in the circuit. Benchmarking is performed first using a cluster of sixteen interconnected computing nodes, corresponding to n equaling 4, each node consisting of two AMD Milan 7763 processors and sixty-four cores on each socket. The number of remote qubits is thus four. Each node is equipped with 256 GB of RAM: 16 x 16 GB DDR4-3200 Dual Rank, which means that the maximal number of qubits that can be simulated in double precision on a single node is 33 qubits (34 qubits will need 256 GB of memory which hits the limit). The nodes are interconnected by Infiniband HDR100 interconnect.

Table 1 below shows the number of added SWAP gates, denoted Nsw, and the execution time in seconds (s) of the compiled quantum algorithm for different numbers of qubits and compilation methods as described in the previous section:

**Table 1**

| Qubit number | Bacic method | | Basic layer method | | Cache blocking | | Invention method | |
|---|---|---|---|---|---|---|---|---|
| | N_{SW} | Run time (s) | N_{SW} | Run time (s) | N_{SW} | Run time (s) | N_{SW} | Run time (s) |
| 30 | 15 | 7.896 | 7 | 5.394 | 4 | 4.833 | 4 | 5.139 |
| 31 | 11 | 12.122 | 7 | 10.268 | 4 | 8.900 | 4 | 9.099 |
| 32 | 14 | 28.022 | 7 | 18.846 | 4 | 17.242 | 4 | 17.669 |
| 33 | 14 | 50.089 | 9 | 41.756 | 4 | 38.885 | 4 | 28.731 |
| 34 | 12 | 80.510 | 8 | 61.473 | 6 | 61.354 | 6 | 57.662 |
| 35 | 17 | 137.480 | 11 | 130.524 | 4 | 96.461 | 4 | 82.524 |
| 36 | 14 | 211.025 | 12 | 196.442 | 4 | 159.697 | 4 | 154.881 |
| 37 | 14 | 406.408 | 10 | 357.065 | 6 | 365.648 | 5 | 334.698 |

One can observe that the invention method results in the least numbers of added SWAP gates for any qubit number, although the Cache Blocking technique achieves same values below 37 qubits. In addition, the invention method records the best run times from 33 qubits, while being only slightly slower (0.4 seconds at most) for lower qubit numbers. This is due to better local qubit selection to be swapped out, even though implementing same numbers of added SWAP gates. Compared to the basic method, it can achieve run-time values decreased by up to 30% in some cases.

Table 2 below shows the number Nsw of added SWAP gates and the run time for the same QAOA MaxCut circuit (depth 1, solving MaxCut on an random graph, edge density of 0.1) but of 40 qubits simulation-executed using the four above-methods in a cluster comprised of 128 nodes, corresponding to n equaling 7, thus seven remote qubits and again 33 local qubits per node:

**Table 2**

| Qubit number | Bacic method | | Basic layer method | | Cache blocking | | Invention method | |
|---|---|---|---|---|---|---|---|---|
| | N_{SW} | Run time (s) | N_{SW} | Run time (s) | N_{SW} | Run time (s) | N_{SW} | Run time (s) |
| 40 | 26 | 843.978 | 18 | 713.508 | 8 | 537.763 | 8 | 508.081 |

Cache blocking technique and invention method provide the least numbers of added SWAP gates, and the invention method the shortest run time.

In order to predict the performance gain on larger quantum circuits which can be simulation-executed using clusters with thousands of nodes, it is possible to count the added SWAP gates on similar quantum circuits with larger numbers of qubits and remote qubits. Table 3 below relates to QAOA circuits again with depth 1, solving MaxCut on random graph and edge density of 0.1, now with 33, 36, 40 local qubits:

**Table 3**

| Qubit number | Number of remote qubits | Bacic method | Basic layer method | Cache blocking | Invention method |
|---|---|---|---|---|---|
| 45 | 5 | 23 | 12 | 8 | 7 |
| 45 | 9 | 40 | 27 | 15 | 14 |
| 45 | 12 | 50 | 41 | 20 | 20 |
| 50 | 10 | 44 | 30 | 16 | 16 |
| 50 | 14 | 62 | 47 | 24 | 24 |
| 50 | 17 | 72 | 57 | 30 | 30 |
| 60 | 20 | 103 | 81 | 39 | 39 |
| 60 | 24 | 124 | 107 | 53 | 53 |
| 60 | 27 | 139 | 121 | 65 | 65 |

Cache blocking technique and invention method provide the least numbers of added SWAP gates from twelve remote qubits, and even from five remote qubits for the invention method.

Thus, it is confirmed that the number of added SWAP gates is reduced significantly using the invention method when a larger quantum circuit is used with a high number of remote qubits. This leads to shortened run times when simulating execution of the compiled quantum circuits on large node clusters.

## Claims

1. A method of simulating execution of a quantum algorithm by using a cluster of non-quantum computers, the non-quantum computers referred as to nodes (100) being interconnected with each other so that any pair out of said nodes is capable of swapping values which are stored each in a respective one of both nodes of the pair,
wherein a quantum state is a tensor-product of ordered qubits, comprising local qubits and remote qubits, with amplitude values of the quantum state that correspond to two tensor-product base states which differ through base states of a single one of the qubits being stored either in a same one of the nodes (100) if the differentiating qubit is local, or stored in two separate ones of the nodes if the differentiating qubit is remote,
wherein an initial quantum circuit corresponding to the quantum algorithm comprises a sequence of ordered gates involving each at least one of the qubits, any gate being either local gate if involving only local qubit(s), or remote gate if involving at least one remote qubit, without considering control qubit(s) further involved with said gate if any,
wherein the method comprises first compiling the initial quantum circuit to obtain a compiled quantum circuit, and then having the nodes (100) execute the quantum algorithm using the compiled quantum circuit,
wherein compiling the initial quantum circuit comprises adding at least one SWAP gate before at least one remote gate in said initial quantum circuit so that said remote gate becomes local gate and execution of the at least one SWAP gate followed by the local gate is equivalent to execution of the remote gate, at least one of the added SWAP gates being effective between a remote qubit involved with the remote gate and a local qubit not-involved with said remote gate, so that the compiled quantum circuit is comprised of sequence portions to be executed after one another and separated by at least one added SWAP gate between two successive ones of the sequence portions, each sequence portion comprising local gates but without any remote gate,
the method being **characterized in that** compiling of the initial quantum circuit comprises the following steps /1/ to /3/ executed for at least one of the sequence portions which extends from a gate of the initial quantum circuit and comprises a variable number of successive gates of said initial quantum circuit in a quantum circuit execution order:
/1/ for each of several tested combinations of SWAP gates to be added before said sequence portion, each tested combination comprising one or more SWAP gates, determining respective transformed sequence portions in which each remote gate has become a local gate and such that execution of the tested combination of SWAP gates followed by execution of the corresponding transformed sequence portion is equivalent to execution of the sequence portion as existing the initial quantum circuit;
/2/ selecting one of the tested combinations of SWAP gates that maximizes the gate number in the sequence portion, the corresponding transformed sequence portion being called maximized sequence portion; and
/3/ in the initial quantum circuit, replacing the sequence portion as existing in said initial quantum circuit by the selected combination of SWAP gates followed by the maximized sequence portion, for obtaining the compiled quantum circuit.

2. The method of claim 1, wherein the sequence portions of the compiled quantum circuit are determined successively, a first one of said sequence portions by executing steps /1/ to /3/ from a first gate of the initial quantum circuit, and then each next sequence portion in the quantum circuit execution order by executing steps /1/ to /3/ for said next sequence portion from a next gate of the initial quantum circuit after the preceding maximized sequence portion.

3. The method of claim 1 or 2, further comprising the following step executed before step /1/ for the at least one of the sequence portions:
- reordering the gates within said sequence portion compared to the initial quantum circuit based on commutation capabilities of said gates.

4. The method of one of the preceding claims, wherein the tested combinations of SWAP gates are worked out using a directed acyclic graph that comprises at least the sequence portion as existing in the initial quantum circuit.

5. A computer-program product, comprising instruction codes suitable for compiling a quantum circuit, **characterized in that** said instruction codes make a cluster of interconnected non-quantum computers, referred to as nodes (100), that runs the computer-program product from an initial quantum circuit execute the following steps /1/ to /3/ for at least one sequence portion which extends from a gate of the initial quantum circuit and comprises a variable number of successive gates of said initial quantum circuit in a quantum circuit execution order:
/1/for each of several tested combinations of SWAP gates to be added before said sequence portion, each tested combination comprising one or more ordered SWAP gates, determining respective transformed sequence portions in which each remote gate has become a local gate and such that execution of the tested combination of SWAP gates followed by execution of the corresponding transformed sequence portion is equivalent to execution of the sequence portion as existing the initial quantum circuit;
/2/ selecting one of the tested combinations of SWAP gates that maximizes the gate number in the sequence portion, the corresponding transformed sequence portion being called maximized sequence portion; and
/3/ in the initial quantum circuit, replacing the sequence portion as existing in said initial quantum circuit by the selected combination of SWAP gates followed by the maximized sequence portion, for obtaining the compiled quantum circuit.

6. The computer-program product of claim 5, wherein the instruction codes are further suitable for determining successively several sequence portions of the compiled quantum circuit, a first one of said sequence portions by executing steps /1/ to /3/ from a first gate of the initial quantum circuit, and then each next sequence portion in the quantum circuit execution order by executing steps /1/ to /3/ for said next sequence portion from a next gate of the initial quantum circuit after the preceding maximized sequence portion.

7. The computer-program product of claim 5 or 6, wherein the instruction codes are further suitable for executing the following step before step /1/ for the at least one sequence portion:
- reordering the gates within said sequence portion compared the initial quantum circuit based on commutation capabilities of said gates.
